# EUROPEAN PATENT SPECIFICATION

(11) **EP 2 431 261 B1**
(45) Date of publication and mention of the grant of the patent: **24.12.2014**
(21) Application number: 11382288.6
(22) Date of filing: 08.09.2011
(51) Int. Cl.: B62D 43/04

(54) **Safety device for a spare-wheel pick-up system**
Sicherheitsvorrichtung für ein Ersatzrad-Aufnahmesystem
Dispositif de sécurité pour système de remontée de roue de rechange

(30) Priority: 15.09.2010 ES 201031375
(43) Date of publication of application: 21.03.2012
(73) Proprietor: Batz, S.Coop., 48140 Igorre (ES)
(72) Inventor: Corral Rodriguez, Pedro, 38700 Castro Urdiales (ES); Puente del Monte, José María, 48920 Portugalete (ES); Garrido Ramos, José Ignacio, 39700 Castro Urdiales (ES)
(74) Representative: Igartua, Ismael

(56) References cited:
- EP-A1- 0 612 653
- US-A1- 2002 066 894
- US-B1- 6 427 981

## Description

### TECHNICAL FIELD

The invention relates to safety devices for systems for picking up spare wheels on motor vehicles.

### PRIOR ART

In some vehicles a spare wheel is held beneath the chassis of the vehicle by means of a spare-wheel pick-up system. The system includes a support shaft on which is supported the wheel, a cable fixed to said support shaft and a mechanism to cause the cable to move up or down to raise or lower the spare wheel. Generally speaking, additionally, when the wheel is held beneath the chassis of the vehicle, the cable is wound onto a drum.

It is known that on occasions, due mainly to the vibrations the vehicle has to withstand, the cable unwinds from or comes off the drum, with the risk that the support shaft, and therefore the wheel, falls. It may also be the case that the cable snaps, due to said vibrations or to the fact that the wheel is improperly tightened on the chassis for example, with the same or worse consequences.

The prior art contains known safety devices for wheel pick-up systems, which try to solve this drawback. Document EP 612653 A1 discloses a device according to the preamble of claim 1. Said device comprises a substantially hollow longitudinal sleeve with at least one window, a support shaft fixed to the cable, which is partially housed in the sleeve, and which is also longitudinally movable in the interior of the sleeve, and an arm with a coupling section, disposed outside the sleeve and pivotable in relation to an axis of rotation between a first position in which the coupling section passes through the window of the sleeve and a second position in which said coupling section is retracted in relation to said window. The support shaft comprises limitation means to cooperate with the coupling section of the arm when said arm is in the first position and the cable snaps (or comes off the drum).

### BRIEF DISCLOSURE OF THE INVENTION

It is an object of the invention to provide a safety device for a spare-wheel pick-up system, in motor vehicles, as described in the claims.

The safety device of the invention, designed for a spare-wheel pick-up system used in motor vehicles, comprises a longitudinal sleeve with a window, a shaft fixed to the cable and disposed in the longitudinal sleeve, which is also longitudinally movable in the interior of the longitudinal sleeve, and an arm with a coupling section, disposed outside the longitudinal sleeve and pivotable in relation to an axis of rotation between a first position in which the coupling section passes through the window of the longitudinal sleeve and a second position in which said coupling section is retracted in relation to said window. The support shaft supports the spare wheel and comprises limitation means to cooperate with the coupling section when the arm is in the first position, the arm holding said shaft, and therefore said spare wheel, limiting the movement of said shaft in the longitudinal sleeve to prevent the spare wheel from falling when the cable snaps (or when said cable comes off the drum, for example).

The device also comprises locking means adapted to prevent, when in the first position, the arm from moving from said first position to the second position when the cable snaps.

When the cable snaps the shaft and the arm cooperate to prevent the spare wheel from falling. If the cable snaps while the vehicle is moving, there is a risk that a pothole, for example, may cause the arm and the shaft to stop cooperating with each other (the arm leaves its first position), causing the spare wheel to fall. The safety device eliminates this risk, as the locking means prevent the arm from leaving its first position even in the event of potholes and major abnormalities on the road on which the vehicle is travelling, said arm and said shaft being unable to stop cooperating with each other, thus ensuring that said arm holds the shaft at all times, and therefore the spare wheel.

These and other advantages and characteristics of the invention will be made evident in the light of the drawings and the detailed description thereof.

### DESCRIPTION OF THE DRAWINGS

Figure 1 shows a perspective view of the device of the invention, with an arm in a first position.
Figure 2 shows a perspective view of the device of Figure 1, with the arm in a second position.
Figure 3 shows a cross-sectional view of the device of Figure 1, with the arm in a third position.
Figure 4 shows the support piece of the device of Figure 1, with an axis of rotation of said device in a rest position.
Figure 5 shows a support piece of the device of Figure 1, with the axis of rotation of said device in an active position.
Figure 6 shows a support piece of the device of Figure 1, in detail.
Figure 7 shows a guide piece of the device of Figure 1, with the axis of rotation of said device in an active position.

### DETAILED DISCLOSURE OF THE INVENTION

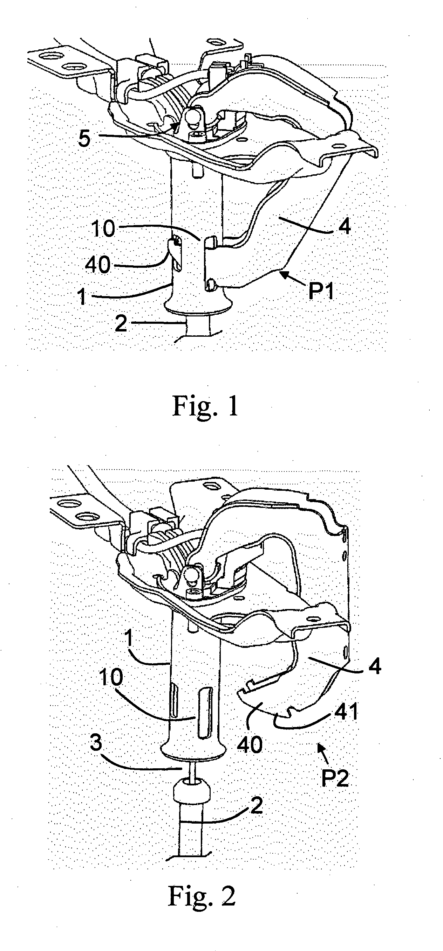

The Figures show an embodiment of the safety device of the invention, which is designed for its use in a spare-wheel pick-up system in vehicles. The device comprises a substantially hollow longitudinal sleeve 1 with at least one window 10, fixed to the structure of the vehicle, a support shaft 2 fixed to the cable 3, which is partially housed in the interior of the sleeve 1 and which is longitudinally displaceable in the interior of said sleeve 1, and an arm 4 with a coupling section 40 on one end, disposed outside the sleeve 1 and pivotable in relation to an axis of rotation 5 between a first position P1, shown for example in Figure 1, in which the coupling section 40 passes through the window 10 of the sleeve 1, said coupling section 40 being in the interior of the sleeve 1 in said first position P1, and a second position P2, shown in Figure 2, in which said coupling section 40 is retracted in relation to said window 10, said coupling section 40 being outside the sleeve 1 in said second position P2.

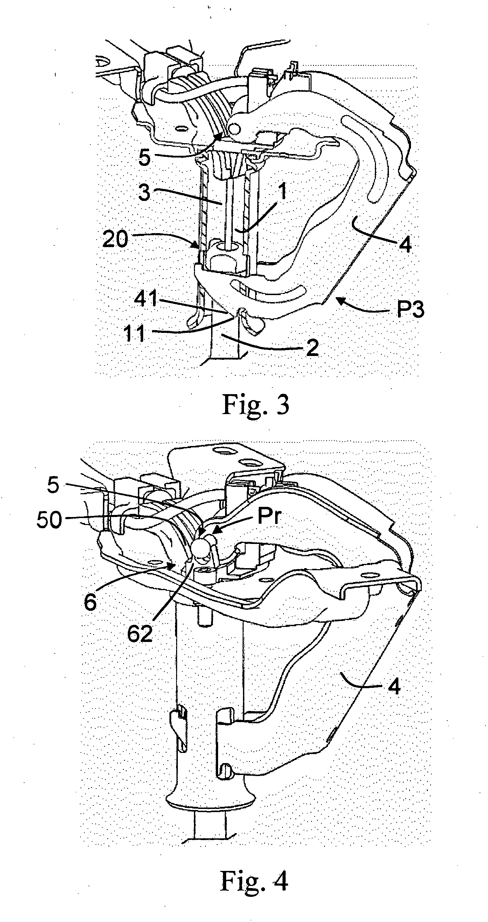

The support shaft 2 supports the spare wheel (not shown in the Figures) when it is housed in the sleeve 1, and comprises limitation means 20 to cooperate with the coupling section 40 in the first position P1, thereby limiting the displacement of said support shaft 2 in the sleeve 1. With reference to Figure 3, the limitation means 20 preferably correspond with an end of said support shaft 2 that comprises a substantially mushroom shape, and the coupling section 40 corresponds with a hook that connects to said end of the support shaft 2 when the cable 3 snaps, the arm 4 thus holding said support shaft 2 when said cable 3 snaps or when said cable 3 comes off the drum, for example. Hereinafter, although only the alternative of the cable 3 snapping is mentioned, it should be understood that it may also be the case that said cable 3 comes off a drum, for example.

The device also comprises locking means adapted to prevent, when in the first position P1, the arm 4 from being displaced from said first position P1 to the second position P2 when the cable 3 snaps which would release the support shaft 2 and would result in the spare wheel falling to the floor, which could result in a very dangerous situation, for example. If the cable 3 snaps while the vehicle is moving, there is a risk that a pothole, for example, may cause the arm 4 and the support shaft 2 to stop cooperating with each other, causing the spare wheel to fall. The safety device of the invention eliminates this risk, as the locking means prevent the arm 4 from leaving its first position P1, preventing said arm 4 and said support shaft 2 from no longer cooperating with each other, thereby ensuring that said arm 4 holds the support shaft 2 at all times and, therefore, continues to hold the spare wheel in a safe manner.

The locking means comprise a projection 41 on the arm 4 shown in Figure 3, on the coupling section 40 of said arm 4, which cooperates with an inner wall 11 of the sleeve 1 to prevent said arm 4 from being displaced from the first position P1 to the second position P2. When, as a result of a vibration or the vehicle going over a pothole, for example, this causes the displacement of the arm 4 in the direction of the second position P2, the inner wall 11 acts as a stopper member and the projection 41 collides against it, the arm 4 being unable to be displaced to said second position P2, said arm 4 remaining held to the support shaft 2 and, therefore, to the spare wheel. Said inner wall 11 is preferably beneath the window 10.

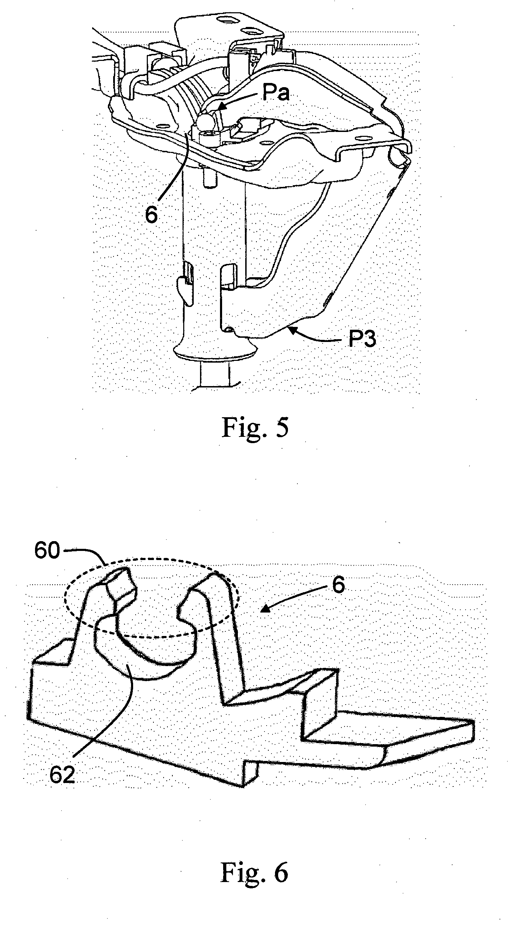

In a preferred embodiment of the invention, the locking means also comprise a support piece 6, fixed to the structure of the vehicle, on which is supported the axis of rotation 5 in a rest position Pr shown in Figure 4, the axis of rotation 5 being moved in relation to said support piece 6 to an active position Pa when the cable 3 snaps, the arm 4 being in the first position P1 due to the weight of the spare wheel, the arm 4 being moved in conjunction with said axis of rotation 5 to a third position P3 shown in Figures 3 and 5, for example, the projection 41 being left facing the inner wall 11 of the housing 1 as a result of said displacement in the active position Pa. When the cable 3 snaps, the support shaft 2 descends or falls due to the weight of the spare wheel until it cooperates with the coupling section 40 of the arm 4, holding said arm 4 to said support shaft 2 and, therefore, to the spare wheel when it is in the first position P1. The weight of said wheel also causes the displacement of the axis of rotation 5 and the arm 4 in relation to the support piece 6, preferably in a substantially vertical direction. Said support piece 6 can comprise a break section 60 shown in Figure 6 (in which the support piece 6 is broken) or a break groove on which is supported said axis of rotation 5, which breaks when it has to support the weight of the spare wheel, said axis of rotation 5 falling, although it can also comprise an elastic support section on which is supported the axis of rotation 5, which acts as a pincer or clip, and which opens due to the weight of the spare wheel when with the arm 4 in the first position P1 the cable 3 snaps, thereby enabling the displacement of said axis of rotation 5. In another configuration not shown in the Figures, the device comprises at least one spring that keeps the support piece 6 in a position in which the axis of rotation 5 remains supported on said support piece 6, the weight of the wheel causing the compression of said spring and, therefore, the displacement of said support piece 6 when the cable 3 snaps, thereby enabling the displacement of said axis of rotation 5. The locking means preferably comprise two support pieces 6 facing each other, two different sections of the axis of rotation 5 being supported on both support pieces 6.

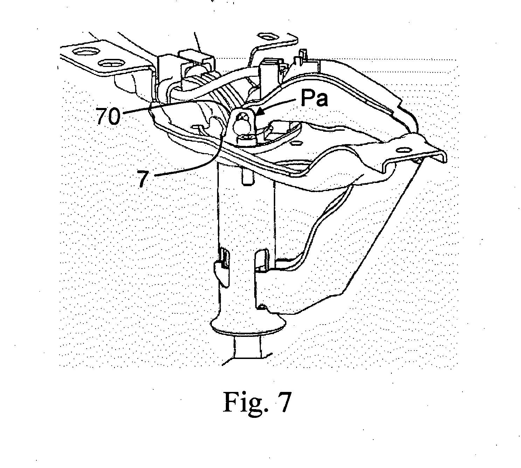

The locking means can also comprise at least one guide piece 7 with a groove 70 to guide the displacement of the axis of rotation 5 when the cable 3 snaps, which is preferably substantially vertical, the axis of rotation 5 being housed transversally in said groove 70. Preferably the locking means comprise two guide pieces 7, each end of the axis of rotation 5 being housed in the groove 70 of a corresponding guide piece 7. Said axis of rotation 5 comprises a cap or a projecting member 50 on each end, so that said axis of rotation 5 is prevented from being dislodged from the groove 70. As a result, thanks to the guide piece 7 and its groove 70, the displacement of the axis of rotation 5 due to the weight of the wheel is guided, it being displaced from the rest position Pr shown in Figure 7 to the active position Pa shown in Figure 2 in a guided manner, said displacement thus being controlled, thereby preventing or largely stopping said displacement from undesired or uncontrolled effects. The guide piece 7 is fixed to the structure of the vehicle and disposed adjacent to the support piece 6.

Preferably, the support piece 6 is made of plastic and the guide piece 7 is made of steel. As a result, the displacement of the axis of rotation 5 and, therefore, the arm 4, is limited by the guide piece 7 and in particular by a limiting surface 71 of the groove 70 of said guide piece 7 on which is supported the axis of rotation 5 when it moves due to the weight of the wheel, as said guide piece 7 is sufficiently strong to support said weight due to the material used. In another embodiment the support piece 6 can be made of steel, for example, so that said support piece 6 would limit said displacement, by means of a base 62 of said support piece 6 on which said axis of rotation 5 is supported. In this last case, the support piece 6 can also be used as a guide, allowing the guide piece 7 to be dispensed with.

## Claims

1. Safety device for a spare-wheel pick-up system, comprising a substantially hollow longitudinal sleeve (1) with at least one window (10), a support shaft (2) fixed to a cable (3), which is partially housed in the sleeve (1) and which is also longitudinally movable in the interior of said sleeve (1), and an arm (4) with a coupling section (40), disposed outside the sleeve (1) and pivotable in relation to an axis of rotation (5) between a first position (P1) in which the coupling section (40) passes through the window (10) of the sleeve (1) and a second position (P2) in which said coupling section (40) is retracted in relation to said window (10), the support shaft (2) comprising limitation means (20) to cooperate with the coupling section (40) of the arm (4) when said arm (4) is in the first position (P1) and the cable (3) snaps, **characterised in that** the device also comprises locking means adapted to prevent, when in the first position (P1), the arm (4) moving from said first position (P1) to the second position (P2) when the cable (3) snaps, the locking means comprising a projection (41) in the arm (4), which cooperates with an inner wall (11) of the sleeve (1) to prevent said arm (4) from moving from the first position (P1) to the second position (P2).

2. Device according to claim 1, wherein the inner wall (11) with which the projection (41) cooperates is beneath the window (10).

3. Device according to claim 1, wherein the inner wall (11) with which the projection (41) cooperates is on one side of the window (10).

4. Device according to any of the preceding claims, wherein the locking means comprise at least one support piece (6) on which is supported the axis of rotation (5), the axis of rotation (5) being displaced in relation to said support piece (6) due to the weight of the spare wheel when the cable (3) snaps, when the arm (4) is in the first position (P1), the arm (4) being displaced in conjunction with said axis of rotation (5).

5. Device according to claim 4, wherein the support piece (6) comprises a break section (60) on which is supported the axis of rotation (5), which, due to the weight of the spare wheel breaks when with the arm (4) in the first position (P1) the cable (3) snaps, thereby enabling the displacement of said axis of rotation (5).

6. Device according to claim 4, wherein the support piece (6) comprises an elastic support section on which is supported the axis of rotation (5), which comprises a substantially pincer or clip shape and which opens when with the arm (4) in the first position (P1) the cable (3) snaps, thereby enabling the displacement of said axis of rotation (5).

7. Device according to claim 4, comprising at least one spring that keeps the support piece (6) in a position in which the axis of rotation (5) remains supported on said support piece (6), the weight of the wheel causing the compression of said spring and, therefore, the displacement of said support piece (6) when the cable (3) snaps, thereby enabling the displacement of said axis of rotation (5).

8. Device according to any of claims 3 to 7, wherein the locking means comprise two support pieces (6), two different sections of the axis of rotation (5) being supported on both support pieces (6).

9. Device according to any of claims 3 to 8, wherein the locking means comprise at least one guide piece (7) with a groove (70) where the axis of rotation (5) is transversally housed, said groove (70) guiding the displacement of said axis of rotation (5) caused by the weight of the spare wheel.

10. Device according to claim 9, wherein the groove (70) is substantially vertical.

11. Device according to either of claims 9 or 10, wherein the groove (70) comprises a limiting surface (71) that limits the movement of the axis of rotation (5).

12. Device according to any of claims 9 to 11, wherein the locking means comprise two guide pieces (7), each end of the axis of rotation (5) being housed in a groove (70) of a corresponding guide piece (7).

## Patentansprüche

1. Sicherheitsvorrichtung für ein Ersatzrad-Aufnahmesystem, umfassend eine im Wesentlichen hohle längs gerichtete Hülse (1) mit mindestens einem Fenster (10), eine Trägerwelle (2), die an ein Kabel (3) befestigt ist, das teilweise in der Hülse (1) untergebracht ist, und das im Inneren der Hülse (1) auch der Länge nach beweglich ist, und einen Arm (4) mit einem Kupplungsabschnitt (40), der außerhalb der Hülse (1) angeordnet und mit Bezug auf eine Drehachse (5) zwischen einer ersten Position (P1), in der der Kopplungsabschnitt (40) durch das Fenster (10) der Hülse (1) verläuft, und einer zweiten Position (P2), in der der Kupplungsabschnitt (40) mit Bezug auf das Fenster (10) zurückgezogen ist, drehbar ist, wobei die Trägerwelle (2) Begrenzungsmittel (20) umfasst, um mit dem Kopplungsabschnitt (40) des Arms (4) zusammenzuarbeiten, wenn sich der Arm (4) in der ersten Position (P1) befindet und das Kabel (3) klickt, **dadurch gekennzeichnet, dass** die Vorrichtung auch Verriegelungsmittel umfasst, die ausgelegt sind, um zu verhindern, dass sich in der ersten Position (P1) der Arm (4) von der ersten Position (P1) in die zweite Position (P2) bewegt, wenn das Kabel (3) klickt, wobei das Verriegelungsmittel einen Vorsprung (41) im Arm (4) umfasst, der mit einer inneren Wand (11) der Hülse (1) zusammenarbeitet, um zu verhindern, dass sich der Arm (4) von der ersten Position (P1) in die zweite Position (P2) bewegt.

2. Vorrichtung nach Anspruch 1, wobei die innere Wand (11), mit der der Vorsprung (41) zusammenarbeitet, unter dem Fenster (10) liegt.

3. Vorrichtung nach Anspruch 1, wobei die innere Wand (11), mit der der Vorsprung (41) zusammenarbeitet, auf einer Seite des Fensters (10) liegt.

4. Vorrichtung nach einem der vorhergehenden Ansprüche, wobei die Verriegelungsmittel mindestens ein Trägerelement (6) umfassen, auf dem die Drehachse (5) getragen wird, wobei die Drehachse (5) mit Bezug auf das Trägerelement (6) aufgrund des Gewichts des Ersatzrads, wenn das Kabel (3) klickt, verschoben wird, wenn sich der Arm (4) in der ersten Position (P1) befindet, wobei der Arm (4) zusammen mit der Drehachse (5) verschoben wird.

5. Vorrichtung nach Anspruch 4, wobei das Trägerelement (6) einen Bruchabschnitt (60) umfasst, auf dem die Drehachse (5) getragen wird, die, aufgrund des Gewichts des Ersatzrads, bricht, wenn, mit dem der Arm (4) in der ersten Position (P1), das Kabel (3) klickt, wodurch die Verschiebung der Drehachse (5) ermöglicht wird.

6. Vorrichtung nach Anspruch 4, wobei das Trägerelement (6) einen elastischen Trägerabschnitt umfasst, auf dem die Drehachse (5) getragen wird, der im Wesentlichen eine Zangen- oder Clipform aufweist, und der sich öffnet, wenn, mit dem Arm (4) in der ersten Position (P1), das Kabel (3) klickt, wodurch die Verschiebung der Drehachse (5) ermöglicht wird.

7. Vorrichtung nach Anspruch 4, umfassend mindestens eine Feder, die das Trägerelement (6) in einer Position hält, in der die Drehachse (5) weiter auf dem Trägerelement (6) getragen wird, wobei das Gewicht des Rads die Komprimierung der Feder und daher die Verschiebung des Trägerelements (6) verursacht, wenn das Kabel (3) klickt, wodurch die Verschiebung der Drehachse (5) ermöglicht wird.

8. Vorrichtung nach einem der Ansprüche 3 bis 7, wobei die Verriegelungsmittel zwei Trägerelemente (6) umfassen, wobei zwei verschiedene Abschnitte der Drehachse (5) auf beiden Trägerelementen (6) getragen werden.

9. Vorrichtung nach einem der Ansprüche 3 bis 8, wobei die Verriegelungsmittel mindestens ein Führungselement (7) mit einer Nut (70) umfassen, in die die Drehachse (5) quer aufgenommen ist, wobei die Nut (70) die Verschiebung der Drehachse (5), hervorgerufen vom Gewicht des Ersatzrads, führt.

10. Vorrichtung nach Anspruch 9, wobei die Nut (70) im Wesentlichen vertikal ist.

11. Vorrichtung nach einem der Ansprüche 9 oder 10, wobei die Nut (70) eine Begrenzungsfläche (71) umfasst, die die Bewegung der Drehachse (5) begrenzt.

12. Vorrichtung nach einem der Ansprüche 9 bis 11, wobei die Verriegelungsmittel zwei Führungselemente (7) umfassen, wobei jedes Ende der Drehachse (5) in einer Nut (70) eines entsprechenden Führungselements (7) aufgenommen ist.

## Revendications

1. Dispositif de sécurité pour un système de ramassage de roue de rechange, comprenant un manchon longitudinal (1) sensiblement creux avec au moins une fenêtre (10), un arbre de support (2) fixé à un câble (3) qui est partiellement logé dans le manchon (1) et qui est également mobile longitudinalement dans l'intérieur dudit manchon (1) et un bras (4) avec une section de couplage (40), disposé à l'extérieur du manchon (1) et pouvant pivoter par rapport à un axe de rotation (5) entre une première position (P1) dans laquelle la section de couplage (40) passe par la fenêtre (10) du manchon (1) et une seconde position (P2) dans laquelle ladite section de couplage (40) est rétractée par rapport à ladite fenêtre (10), l'arbre de support (2) comprenant des moyens de limitation (20) pour coopérer avec la section de couplage (40) du bras (4) lorsque ledit bras (4) est dans la première position (P1) et que le câble (3) s'encliquette, **caractérisé en ce que** le dispositif comprend également des moyens de blocage adaptés pour empêcher, lorsqu'il est dans la première position (P1), le bras (4) de passer de ladite première position (P1) à la seconde position (P2) lorsque le câble (3) s'encliquette, les moyens de blocage comprenant une saillie (41) dans le bras (4), qui coopère avec une paroi interne (11) du manchon (1) pour empêcher ledit bras (4) de passer de la première position (P1) à la seconde position (P2).

2. Dispositif selon la revendication 1, dans lequel la paroi interne (11) avec laquelle la saillie (41) coopère, est au-dessous de la fenêtre (10).

3. Dispositif selon la revendication 1, dans lequel la paroi interne (11) avec laquelle la saillie (41) coopère, est sur un côté de la fenêtre (10).

4. Dispositif selon l'une quelconque des revendications précédentes, dans lequel les moyens de blocage comprennent au moins une pièce de support (6) sur laquelle est supporté l'axe de rotation (5), l'axe de rotation (5) étant déplacé par rapport à ladite pièce de support (6) en raison du poids de la roue de rechange lorsque le câble (3) s'encliquette, lorsque le bras (4) est dans la première position (P1), le bras (4) étant déplacé conjointement avec ledit axe de rotation (5).

5. Dispositif selon la revendication 4, dans lequel la pièce de support (6) comprend une section de rupture (60) sur laquelle est supporté l'axe de rotation (5) qui, en raison du poids de la roue de rechange, se casse lorsque, avec le bras (4) dans la première position (P1), le câble (3) s'encliquette, permettant ainsi le déplacement dudit axe de rotation (5).

6. Dispositif selon la revendication 4, dans lequel la pièce de support (6) comprend une section de support élastique sur laquelle est supporté l'axe de rotation (5), qui comprend sensiblement une forme de pince ou d'attache et qui s'ouvre lorsque, avec le bras (4) dans la première position (P1), le câble (3) s'encliquette, permettant ainsi le déplacement dudit axe de rotation (5).

7. Dispositif selon la revendication 4, comprenant au moins un ressort qui maintient la pièce de support (6) dans une position dans laquelle l'axe de rotation (5) reste supporté sur ladite pièce de support (6), le poids de la roue provoquant la compression dudit ressort et par conséquent, le déplacement de ladite pièce de support (6) lorsque le câble (3) s'encliquette, permettant ainsi le déplacement dudit axe de rotation (5).

8. Dispositif selon l'une quelconque des revendications 3 à 7, dans lequel les moyens de blocage comprennent deux pièces de support (6), deux sections différentes de l'axe de rotation (5) étant supportées sur les deux pièces de support (6).

9. Dispositif selon l'une quelconque des revendications 3 à 8, dans lequel les moyens de blocage comprennent au moins une pièce de guidage (7) avec une rainure (70) où l'axe de rotation (5) est transversalement logé, ladite rainure (70) guidant le déplacement dudit axe de rotation (5) provoqué par le poids de la roue de rechange.

10. Dispositif selon la revendication 9, dans lequel la rainure (70) est sensiblement verticale.

11. Dispositif selon les revendications 9 ou 10, dans lequel la rainure (70) comprend une surface de limitation (71) qui limite le mouvement de l'axe de rotation (5).

12. Dispositif selon l'une quelconque des revendications 9 à 11, dans lequel les moyens de blocage comprennent deux pièces de guidage (7), chaque extrémité de l'axe de rotation (5) étant logée dans une rainure (70) d'une pièce de guidage (7) correspondante.
